(19) Europäisches Patentamt
European Patent Office
Office européen des brevets

(11) **EP 2 713 457 A2**

(12) **EUROPEAN PATENT APPLICATION**

(43) Date of publication:
02.04.2014 Bulletin 2014/14

(51) Int Cl.:
*H01S 3/23* (2006.01)　　*H01S 3/0941* (2006.01)
*H01S 3/16* (2006.01)　　*H01S 3/06* (2006.01)

(21) Application number: 13178069.4

(22) Date of filing: 25.07.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 22.08.2012 US 201213592021

(71) Applicant: **Lee Laser, Inc.**
**Orlando, FL 32809 (US)**

(72) Inventor: **Peng, Xiaoyuan**
**Portland, OR 97229 (US)**

(74) Representative: **Borchert, Uwe Rudolf et al**
**Bajuwarenring 21**
**82041 München/Oberhaching (DE)**

(54) **Optical amplifier and process**

(57) An optical amplifier receives a seed laser having a wavelength of 1064 nm. Amplification occurs in a segmented Nd:YVO$_4$ gain medium pumped with a pump source. Each segment of the gain medium has a length and dopant concentration and together the segments enhance power absorption in the gain medium enabling use of a higher power end pump which increases pulse energy and average power of the laser. The first end of the gain medium includes a wedge surface which arranges a quad-pass optical amplifier to achieve high extraction efficiency.

FIG. 1

EP 2 713 457 A2

**Description**

The invention is in the field of Master Oscillator Power Amplifier (MOPA) lasers. Master oscillator power amplifier (MOPA) configurations include a seed laser and an amplifier which increases the power output of the seed laser to do useful work.

United States Patent No. 7,720,121 to Peng et al. states in the Abstract thereof: "High-power, diode-pumped solid state (DPSS) pulsed lasers are preferred for applications such as micromachining, via drilling of integrated circuits, and ultraviolet (UV) conversion. Nd:YVO$_4$ (vanadate) lasers are good candidates for high power applications because they feature a high energy absorption coefficient over a wide bandwidth of pumping wavelengths. However, vanadate has poor thermo-mechanical properties, in that the material is stiff and fractures easily when thermally stressed. By optimizing laser parameters and selecting pumping wavelengths and doping a concentration of the gain medium to control the absorption coefficient less than 2 cm-1 such as the pumping wavelength between about 910 nm and about 920 nm, a doped vanadate laser may be enhanced to produce as much as 100 W of output power without fracturing the crystal material, while delivering a 40% reduction in thermal lensing."

United States Patent No. 7,203,214A to Butterworth discloses a "laser comprising: a laser resonator including a gain element of Nd:YV04 having a length of at least 5 mm, said gain element being end-pumped and wherein the pump-light has a wavelength selected to be different from the peak absorption wavelength of the gain element and falling between about 814 and 825 nanometers in order to reduce thermal stresses and breakage of the gain element, such that the pump source can be operated to deliver greater than 22 Watts of power to the gain medium."

The publication entitled, Power Scaling of Diode-Pumped Nd:YVO4 Lasers, IEEE JOURNAL OF QUANTUM ELECTRONICS, VOL. 38, NO. 9, SEPTEMBER 2002, Xiaoyuan Peng, Lei Xu, and Anand Asundi, is incorporated herein by reference hereto in its entirety. This article includes information about Nd doping concentrations and it also includes information about the size of the cross-sectional areas of the gain mediums insofar as their ability to handle pump power levels.

A master oscillator power amplifier (MOPA) laser is disclosed.

The amplifier is an optical amplifier having an input signal in the form of a seed laser which generates an output signal with higher optical power. The amplification occurs in a gain medium which is provided with energy from an external source. The gain medium is "pumped" or "energized" from an outside source of energy. Typically, the outside source of energy is light. The pump may be an optical pump or other suitable energy source. The pump may be a diode pumped light source.

The seed laser may include an oscillator, a length of optical fiber (or free space cavity), one or two mirrors, Q-switches with and/or without reflective coatings, and optics. The seed laser preferably operates at a wavelength of 1064 nm (1064 nanometers) but other wavelengths are specifically contemplated. Q-switches may be electro-optic modulators or acousto-optic modulators. Both types of Q-switches are controlled and driven by an electronic driver. For a mode-locked laser with a high repetition rate which gives fairly high pulse energy, a pulse picker is needed to lower the repetition. If an electro-optic pulse picker is used, it may employ a Pockels cell and polarizing optics. The pockels cell manipulates the polarization state and a polarizer then transmits or blocks the pulse depending on its polarization.

If an acousto-optic pulse picker is used, short RF pulses are applied to the acousto-optic modulator deflecting the desired pulse in a slightly modified direction for use while other non- deflected pulses are blocked. An acousto-optic modulator (AOM) may be used for controlling power, frequency or spatial direction of a laser beam with an electrical drive signal. AOM's are based on an acousto-optic effect which modifies the refractive index of a crystal by the application of an oscillating mechanical pressure of a sound wave. As the refractive index is modified, the direction of the desired pulses is changed and then the deflected pulses are useable.

The length of the optical fiber can be varied to change the effective cavity dimensions. The seed laser such as a mode-locked laser produces a pulsed output having pulses with a pulse width of approximately 5-30 picoseconds at a repetition rate of between 10 kHz and 100 MHz. It is specifically contemplated that other pulse widths be used. Specifically, it is contemplated that a range of pulse widths are producible by the invention disclosed herein, namely, pulse widths between 15 milliseconds and 15 femtoseconds may be created having the desired characteristics by the invention disclosed herein. For long pulse widths such as a pulse width of 15 milliseconds, appropriate reduction of the repetition rate is necessary and achievable. The repetition rate can be less than 10 Hz up to 100 MHz. The seed laser includes a first polarization which is subsequently converted to a polarization which matches the polarization of the Nd:YVO$_4$ gain medium. The pulses of the pulsed output of the seed laser are amplified by the Nd:YVO$_4$ gain medium which is optically pumped by an optical pump. A highly reflective mirror is used to control the number of times (passes) that the pulses of the pulsed output of the seed laser make through the generally rectangularly shaped, in cross-section, Nd:YVO$_4$ gain medium. The Nd:YVO$_4$ gain medium may be square in cross-section, or it may be circular in cross-section, or it may be some other shape in cross-section. The first end of gain medium is a planar wedge surface oriented at wedge angle, $\theta 1$.

The Nd:YVO$_4$ gain medium includes a first end and a second end. The gain medium may be in the range of 5 - 30 mm long and may have a cross-section that is between 1 mm$^2$ and 36mm$^2$. A 5-30 mm crystal is long enough to absorb 99% of a 40 W pump power at 808 nm with a sufficiently and permissibly high Nd doping concentration. Longer crystals are preferable for heat removal. Alternatively, an Nd:YVO$_4$ gain medium having a cross-sectional configuration other than rectangular may be used. For instance, a circular, in cross-section, Nd:YVO$_4$ gain medium may be used. Circular Nd:YVO$_4$ gain mediums with low absorption coefficients having small diameters and long lengths dissipate heat well and protect the crystal against fracture. Nd:YV04 gain mediums in the shape of a rod may be used.

The Nd concentration at each segment is not limited to be arranged from low to high with the lowest concentration proximate the optical pump. The length of each segment determines absorption length, which coordinates the Nd concentration for the gain.

Other pump wavelengths may be used, for instance, the pump central wavelengths may be at 808 nm, 820 nm, 880 nm, 888 nm or 915 nm, +/- 10 nm. The pump may be an end pump or one or more side pumps. If more than one side pump is used, then the side pumps may have different power output levels. Different power output levels may be applied to each segment of the segmented gain medium as desired with each segment being Nd doped as desired. The pump(s) may be a diode pump light source or other suitable light source. Use of pumps other than optical pumps are contemplated by the instant invention disclosed herein.

The Nd:YVO$_4$ gain medium of the amplifier includes a second polarization. Polarization converting means for matching the first polarization of the seed laser with the second polarization of the Nd:YVO$_4$ gain medium of the amplifier resides between the output lens of the seed laser and the input wedge surface of the first end of the Nd:YVO$_4$ gain medium of the amplifier.

The second end of the Nd:YVO$_4$ gain medium of the amplifier includes a second end surface proximate the diode pump light source operating at 808 nm. More specifically, a 40 Watt diode pump light source (end pump) operates at 808 nm and resides proximate the second end of the Nd:YVO$_4$ gain medium. Other diode pump wattages are contemplated between 30-60 Watts.

The first end of the Nd:YVO$_4$ gain medium includes a wedge surface coated with an anti-reflective coating. The pulses of the pulsed output of the seed laser enter the anti-reflective coating on the wedge surface of Nd:YVO$_4$ gain medium at an incident angle, $\theta2$, along a first exterior path. The incident angle, $\theta2$, is measured with respect to a line which is perpendicular to the wedge surface of the Nd:YVO$_4$ gain medium. It will be noticed that the wedge surface is a planar surface and that it is formed at a wedge angle, $\theta1$. Wedge angle, $\theta1$, is measured with respect to a vertical plane cut through one point of the wedge surface. It will be further noticed that the input seed laser enters the wedge surface at an angle, $\theta6$, with respect to a line parallel to the center line of the gain medium. $\theta6 = \theta2 - \theta1$. The wedge angle, $\theta1$, is designed between 3-10° and is preferred to be in the range of 5-7°. $\theta2$, the incident angle of the seed laser is less than or equal to 15°. The angle, $\theta2$, is also the refracted angle of the fourth pass of the pulses in the quad pass example as will be described further hereinbelow. A wedge angle, $\theta1$, of 5-7° yields a preferable reflective angle, $\theta3$, of approximately 0.78°.

Refractive angle $\theta2'$ is the angle of refraction made by the seed laser coming into the wedge surface on the first pass. Refractive angle $\theta2'$ is measured with respect to a line perpendicular to the wedge surface.

The seed laser is reflected at an internal reflective angle, $\theta3$, within Nd:YVO$_4$ gain medium. The internal reflective angle, $\theta3$, is defined with respect to the centerline of the Nd:YVO$_4$ gain medium. As stated previously, the preferred refractive angle, $\theta3$, is approximately 0.78°. It is desired to minimize the reflective angle, $\theta3$, of the seed laser within the gain medium such that the pulses of the seed laser remain relatively centered with respect to the centerline of the axis through the gain medium so as to effectively transfer as much energy as possible to the laser as it passes through the gain medium. The energy of the pulses from the seed laser is increased as the pulses pass through the gain medium. Additionally, the preferred reflective angle, $\theta3= 0.78°$, has to be large enough to ensure separation of the seed laser input into the wedge surface of the gain medium from the seed laser output from the gain medium.

The internal reflective angle, $\theta3 = 0.78°$, yields a shift with respect to the axis of the gain medium of approximately 0.27 mm for a gain medium that is approximately 20 mm in length. Additionally, if the gain medium is approximately 10 mm in length, then the internal reflective angle, $\theta3= 0.78°$, yields a shift with respect to the axis of the gain medium of approximately 0.135 mm.

The seed laser is refracted on the first pass through and within the Nd:YVO$_4$ gain medium along the first path at an angle $\theta2'$ as it travels toward the second end surface of the Nd:YVO$_4$ gain medium. The second end surface of the Nd:YVO$_4$ gain medium proximate the pump includes a second coating highly reflective to the seed laser at the 1064 nm wavelength and the second coating is highly transparent to light from the end pump at 808 nm wavelength.

The seed laser is reflected at the internal reflective angle, $\theta3$, by the highly reflective second coating on the second surface of the Nd:YVO$_4$ gain medium and causes the 1064 nm wavelength laser pulses to travel on a second pass through and within the Nd:YVO$_4$ gain medium toward the wedge surface of the Nd:YVO$_4$ gain medium. The path of the seed laser approaches the wedge surface at an incident angle, $\theta4$. The laser pulses exit the wedge surface of the Nd:YVO$_4$ gain medium at a refraction angle, $\theta5$ along a second exterior path. The refraction angle, $\theta5$, and the incident angle, $\theta4$, are measured with respect to a line normal (perpendicular) to the first end of said Nd:YVO$_4$ gain medium.

The invention produces a pulsed laser having a pulse width of 10 picoseconds plus / minus 5 picoseconds at repetition rates between 10 kHz and 100 MHz. Pulse energy of 100mJ at more than 100 kHz produces an average power of 10 J/s or more than 10W. The output power is also a function of the input seed laser average power which may range between sub-mW (for example less than one Watt) and multi-watts. With high input seed laser average powers, the invention may produce average output powers which far exceed 10W.

Another example of the invention includes a segmented gain medium wherein each segment of the gain medium includes a different Nd dopant concentration. The segments of the gain medium may be arranged as desired in regard to doping concentrations. For instance, the segment with the lowest Nd concentration may be adjacent the pump light source. Next, the segment with the next lowest Nd concentration may be adjacent the segment with the lowest Nd concentration. Finally, the third segment with the highest Nd concentration may be last in line. The segments can be arranged in any order of Nd concentration. The Nd concentration of one or more segments may be zero.

Multiple passes of the seed laser pulses through the end pumped gain medium achieves a very high gain. Side pumping the gain medium with one or more optical pumps is disclosed and claimed. The gain medium comprises three diffusion bonded segments having different lengths and dopant concentrations resulting in different gains and distributions. Alternatively, instead of diffusion bonding, the segments may be secured together by using anti-reflective coating between the segments. Scaling the doping percentage by a factor of 3 yields an $\alpha = 0.15$ where $\alpha$ is the absorption coefficient. The absorption efficiency is:

$$\eta = (1 - e^{-\alpha L}).$$

It would appear, therefore, without any further knowledge of Nd:YVO$_4$ crystals that an increase in efficiency would be accomplished by using a longer crystal and/or by an increase in the absorption coefficient. However, the absorption coefficient, $\alpha$, does not, alone, indicate that there are thermal lensing effects and physical limits to coefficient $\alpha$ and applied power. As power applied to the Nd:YVO$_4$ crystal increases, then the concentration of the Nd doping is reduced and the cross section of the crystal (whether rectangular, circular or other shaped cross-section) is then reduced. Lower doping concentration enables use of higher pump power. The publication entitled, Power Scaling of Diode-Pumped Nd:YVO4 Lasers, IEEE JOURNAL OF QUANTUM ELECTRONICS, VOL. 38, NO. 9, SEPTEMBER 2002, Xiaoyuan Peng, Lei Xu, and Anand Asundi, is incorporated herein by reference hereto in its entirety. This article includes information about Nd doping concentrations and it also includes information about cross-sectional areas insofar as their ability to handle power levels.

Pabs per segment is given by the following equation:

$$Pabs = Pinput(1 - e^{-\alpha L})$$

Power available/transmitted to subsequent segment is given by the following equation.

$$Pinput = Ppump - (\Sigma Pabs)$$

Applying this system of scaling the pump power by absorbing pump power in segments allows usage of higher pump power and higher energy transfer to the Nd:YVO$_4$ crystal. Higher energy transfer to the Nd:YVO$_4$ crystal results in higher gain of the seed laser as it travels within the gain medium.

Using segments with gradually increased doping concentrations prevents fracturing of the segments. Segment cross-sectional area is reduced and Nd dopant concentration is reduced if it is desired to use a high power optical end pump. Scaling the cross-sectional area down and lowering the Nd dopant concentration enables use of high power pumps which enables large energy/power to the Nd:YVO$_4$ crystal which, in turn, allows energy to be transferred to the pulses of the pulsed output of the seed laser. If the power applied to each segment is calculated and is kept within acceptable limits for its cross sectional area and for the dopant concentration then fracturing of the crystal is prevented.

Each segment can also be treated as one stage of the amplifier with a certain gain. Multiplied gain is provided by multiple stages of amplification, so optimized design of the gain for each segment can be expected to achieve the highest extraction efficiency from a given pump power.

It is an object of the invention to provide a laser having a high gain medium.

It is an object of the invention to provide a laser which transfers large amounts of power to the Nd:YVO$_4$ gain medium.

It is an object of the invention to provide a laser having a high gain medium comprised of segments having appropriate concentrations of Nd dopant and appropriate cross sectional areas to enable large amounts of power to be absorbed by the Nd:YVO$_4$ gain medium.

It is an object of invention to provide a laser having a high extraction efficiency from pump-to-laser even with a fairly low (small) seed signal.

It is an object of the invention to provide a laser having a high gain medium comprised of a wedge surface on one end thereof to prevent self lasing.

It is an object of the invention to provide a laser having a high gain medium comprised of a wedge surface on one end thereof to provide sufficient separation of the incoming and outgoing pulses.

It is an object of the invention to provide a laser having a high gain medium having multiple passes therethrough to increase the gain of the seed laser output.

It is an object of the invention to provide a laser having a segmented high gain medium having multiple passes therethrough to increase the gain of the seed laser output.

It is an object of the invention to provide a laser having a high gain medium which includes a wedge surface and wherein the incident angle of the incoming pulses of the pulsed output of the seed laser impinge on the wedge surface such that they are refracted at an angle on a first interior path within the high gain medium so as to reside within the pump spot size as they travel within the gain medium thus maximizing energy transfer to the pulses.

It is an object of the invention to maintain the seed laser within the pump spot size in the gain medium.

Further advantages, features and potential applications of the present invention may be gathered from the description which follows, in conjunction with the embodiments illustrated in the drawings.

Throughout the description, the claims and the drawings, those terms and associated reference signs will be used as are notable from the enclosed list of reference signs. In the drawings is shown

Fig. 1      a schematic of a laser including a seed laser input, a polarizer, two half wavelength plates, a rotator and a quadruple pass (quad pass) Nd:YVO$_4$ gain medium, wherein a first amplifier includes an optical end pump, the quadruple pass (quad pass) Nd:YVO$_4$ gain medium, and a highly reflective mirror;

Fig. 1A      a schematic of a laser including a seed laser input, a polarizer, two half wavelength plates, a rotator and a double pass (dual pass) Nd:YVO$_4$ gain medium, wherein a second amplifier includes an optical end pump, the double pass (dual pass) Nd:YVO$_4$ gain medium, and a highly reflective mirror;

Fig. 1B      a perspective view of the schematic of Fig. 1;

Fig. 1C      a schematic view of a laser including an optically side pumped Nd:YVO$_4$ gain medium;

Fig. 1D      a schematic view of another example of a laser including an optically side pumped Nd:YVO$_4$ gain medium;

Fig. 1E      a schematic view of another example of a laser including an optically side pumped Nd:YVO$_4$ gain medium;

Fig. 2      a schematic illustrating a first amplifier having a quadruple pass (quad pass) Nd:YVO$_4$ gain medium coupled with a second amplifier having a double pass (dual pass) gain medium, the first amplifier includes an optical end pump and the second amplifier includes an optical end pump, and, four mirrors are employed in the example of Fig. 2;

Fig. 3      a graph indicating power amplification of various mW average seed power input signals for the quad pass schematic of Fig. 1;

Fig. 4      a graph indicating power amplification of various mW average seed power input signals for the dual pass schematic of Fig. 1A;

Fig. 5      a schematic indicating a Nd:YVO$_4$ gain medium having a wedge surface at the first end of the gain medium and having a second end surface at the second end of the gain medium together with the first exterior path of the seed laser, the first interior path of the amplified seed laser, the second interior path of the amplified seed laser and the second exterior path of the amplified seed laser;

Fig. 5A      an end view of Fig. 5 along the lines 5A-5A;

Fig. 5B      an end view of a circular, in cross-section, Nd:YVO$_4$ gain medium;

Fig. 6      a graph of the wedge angle of: Nd:YVO$_4$ gain medium versus the incident angle of the seed laser; and, the wedge angle of the Nd:YVO$_4$ gain medium versus the internal reflected angle of the seed laser in the gain medium;

Fig. 7      graphical plot of: the separation distance at the first end surface of the gain medium of input path of the laser from the output path of the laser as a function of wedge angle; and, the distance between mirror M1 to the incoming seed laser;

Fig. 8      a schematic of the use of a quadruple pass amplifier including a gain medium, a first mirror, and a second mirror;

Fig. 8A      a graph of the spot size as a function of distance of travel for the schematic of Fig. 8 indicating the first pass, the second pass, the third pass, the fourth pass and the location of the mirror and the second mirror.

Fig. 9      a schematic presentation of the seed laser at a wavelength of 1064 nm and repetition rate of 100 kHz;

Fig. 9A      a schematic presentation of an optical pump and the seed laser pulsed output residing proximate the second end of the gain medium;

Fig. 10      a schematic presentation of the seed laser at a wavelength of 1064 nm, repetition rate of 100 kHz;

Fig. 10A      a schematic presentation of an optical pump and the seed laser residing proximate the second end of the gain medium wherein the gain medium comprises three diffusion bonded segments having different lengths and dopant concentrations resulting in different gains and pump power absorption;

Fig. 10B      a chart of the dopant concentration, C% at., segment length, alpha (scaled dopant concentration) and Pabs (absorbed power) per segment, and

Fig. 11      a schematic similar to Fig. 5 wherein the Nd:YVO$_4$ gain medium comprises three segments with different doping concentration for each segment.

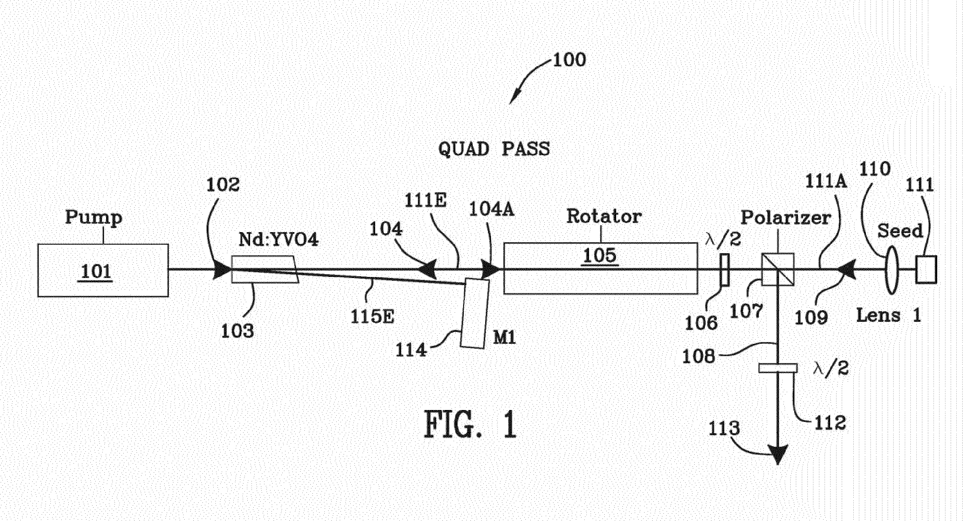

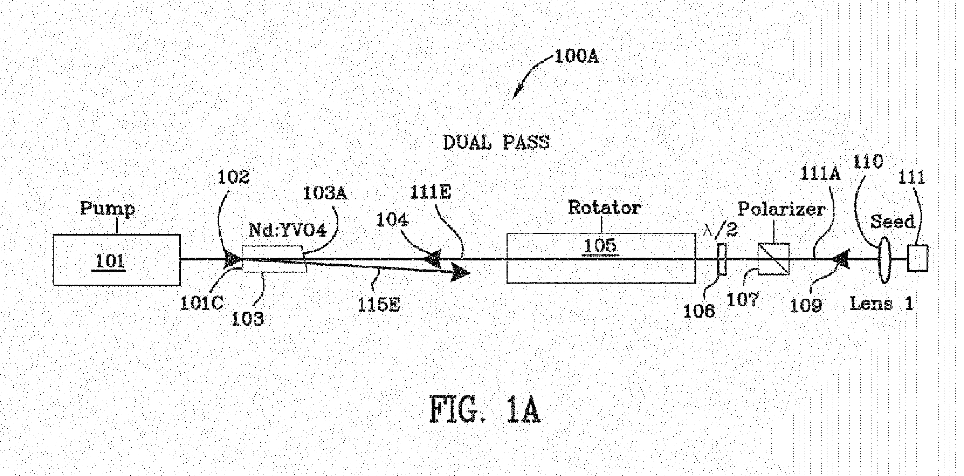

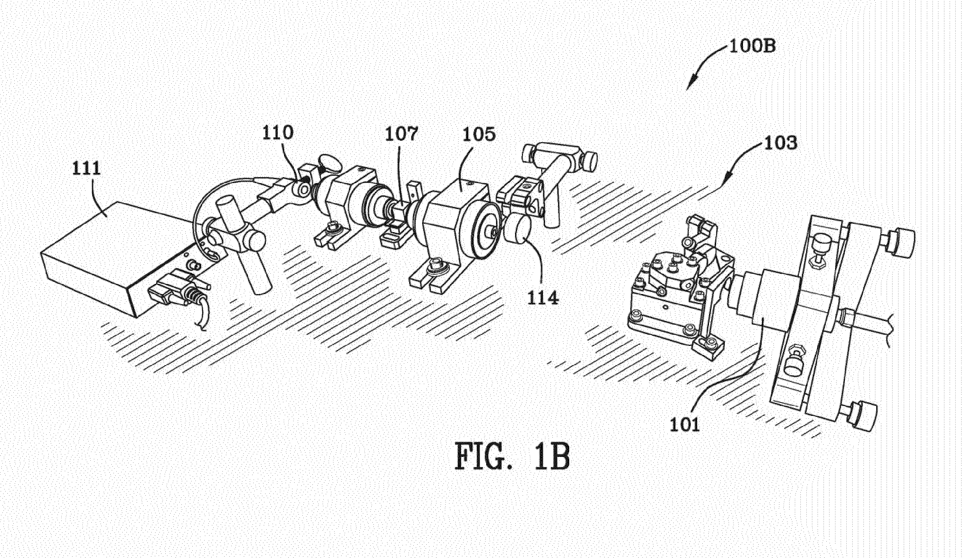

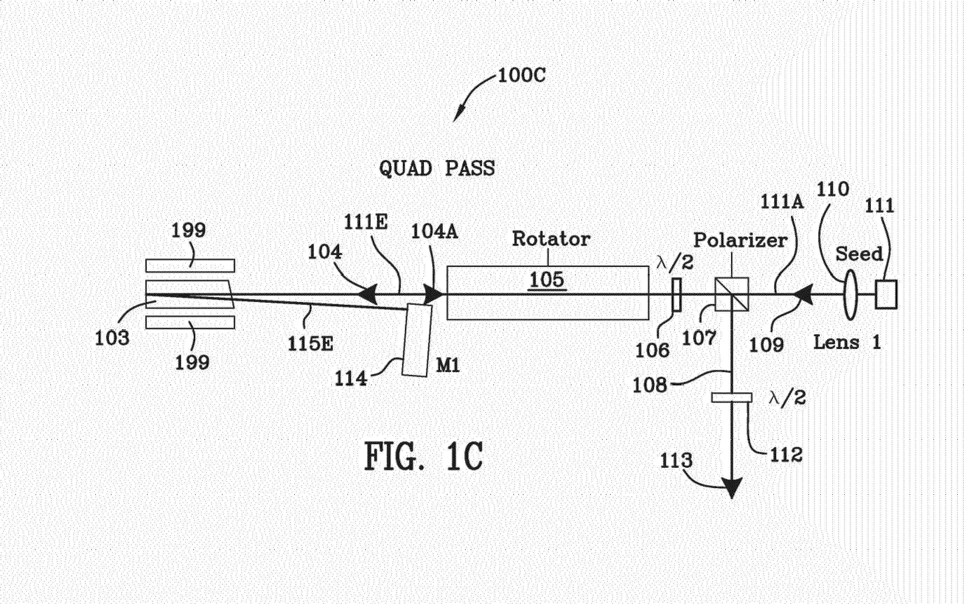

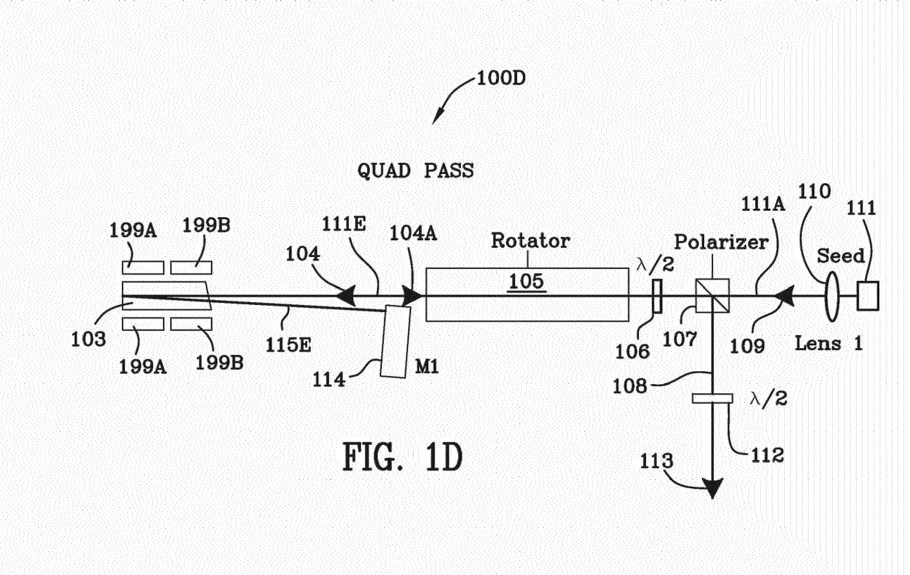

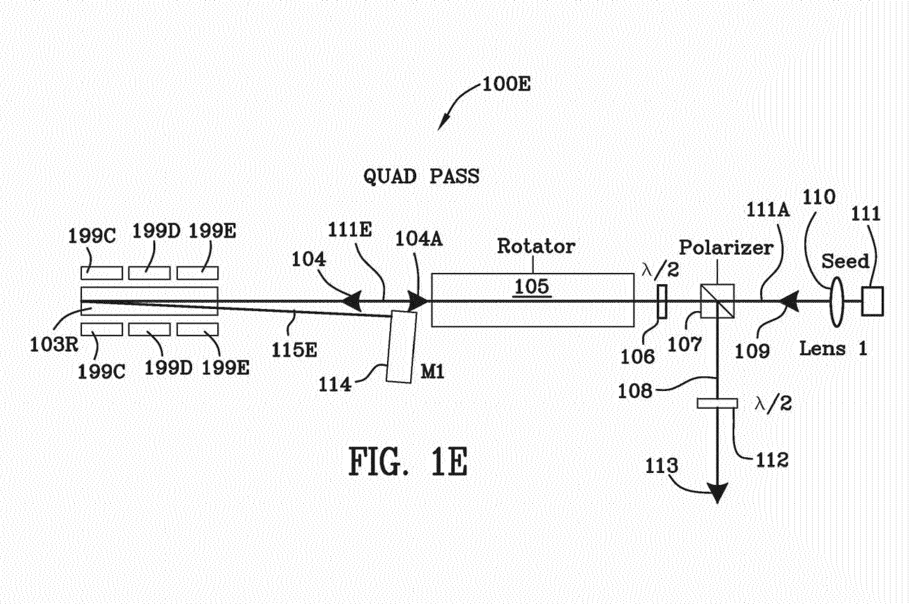

Fig. 1 is a schematic 100 of a seed laser 111, seed lens 110, a polarizer 107, two half wavelength plates 106, 112, a rotator 105 and a quadruple pass (quad pass) Nd:YVO$_4$ gain medium 103, wherein the amplifier includes an optical end pump 101, the gain medium 103, and a highly reflective mirror 114. The seed laser spot size is substantially determined by the selection of the lens 110. Determination of the laser spot size in the gain medium required is based on desired gain. The gain volume within the Nd:YVO$_4$ gain medium 103 is dependent on the spot size of the optical end pump and doping concentration of Nd. It is desirable to use an appropriately sized spot size of the seed laser and an appropriately sized spot size of the optical end pump.

Optical end pump 101 is preferably a diode end pump. Gain medium 103 has a wedge shaped end surface 103A coated with an anti-reflective coating. Wedge end surface 103A is on the first end of the gain medium 103. Second end surface 101C of the gain medium is flat and coated with a highly transparent (transmissive) coating at a wavelength of 808 nm and the coating is highly reflective at a wavelength of 1064 nm.

Seed laser 111 produces a pulsed output 111A having pulses with a pulse width of approximately 10 picoseconds, plus or minus 5 picoseconds, at a repetition rate of between 10 kHz and 100 MHz and at a wavelength of 1064 nm. The pulses comprise light having a wavelength of 1064 nm. As the pulses come into and through the gain medium 103 they impinge on the second end surface 101C and are reflected by the highly reflective coating thereon.

Referring to Fig. 1, Nd:YVO$_4$ gain medium 103 is end pumped by laser diodes operating at a wavelength of 808 nm. Other pump wavelengths may be used, for instance, the pump central wavelengths may be at 808 nm, 820 nm, 880 nm, 888 nm or 915 nm, +/-10 nm. The pump may be an end pump or one or more side pumps. See Figs. 1C, 1D and 1E. The pump may be a diode pump light source or other suitable light source. Arrow 102 indicates the flow of power into the gain medium. Gain medium 103 crystal is AR-coated (anti-reflective coated) for the wavelength of 1064 nm on the wedged surface 103A. Second end surface 101C of the gain medium 103 is HR-coated (highly reflective coated) for wavelengths of 1064 nm and is HT-coated (highly transmissive) at 808 nm on the pump surface. A highly transmissive coating is used for pumping at the other wavelengths, namely, 820 nm, 880 nm, 888 nm and 915 nm. This means that surface 101C reflects the amplified seed laser 104 coming out rotator 105. A polarized seed laser at the wavelength of 1064nm passes through polarizer 107, half-lambda wave plate 106, and a rotator 105 to the gain medium 103. Reference numerals 104/104A indicate bidirectional flow of the pulses / lasers at different times.

Still referring to Fig. 1, the seed laser travels four (4) times within gain medium 103. The amplified laser output 104A is separated by the polarizer 107 which shifts the polarization by 90° with respect to the polarization of the output pulses of the seed laser 111A.

Gain medium 103 can be circular, rectangular, square or other shape in cross-section. The gain medium may be any shape in cross-section. If the cross-sectional shape is rectangular, the sides of the rectangle are generally equal in length making the cross-section a square. Each side of the rectangle is between 1-6 mm and the length of the gain medium is between 5-30 mm. Generally rectangularly shaped gain mediums are used. Cylindrically shaped, in cross-section, rods may be used and heat transfer from rods of small diameter is good.

Still referring to Fig. 1, seed laser 111 emits pulses along path 111A into and through polarizer 107, half wave plate 106, and rotator 105 wherein the polarization is converted to the polarization of the gain medium 103. Fig. 1A is a schematic 100A of the example of a dual pass amplifier which is created by the removal of mirror M1. Fig. 1B is a perspective view 100B of the schematic of Fig. 1 illustrating the seed laser 111, the lens 110, polarizer 107, rotator, gain medium 103 housed within a cooling chamber, and an optical pump 101.

Fig. 1C is a schematic view 100C of a laser including an optically side pumped $Nd:YVO_4$ gain medium 103. Side pump 199 is illustrated surrounding, as desired, partially or completely, the gain medium 103. Fig. 1D is a schematic view 100D of another example of a laser including an optically side pumped $Nd:YVO_4$ gain medium 103 having first optical side pump 199A and second optical side pump199B surrounding, as desired, partially or completely, the gain medium 103. Fig. 1E is a schematic view 100E of another example of a laser including an optically side pumped $Nd:YVO_4$ gain medium 103R having three optical side pumps, 199C, 199D, and 199E surrounding, as desired, partially or completely, the gain medium 103R.

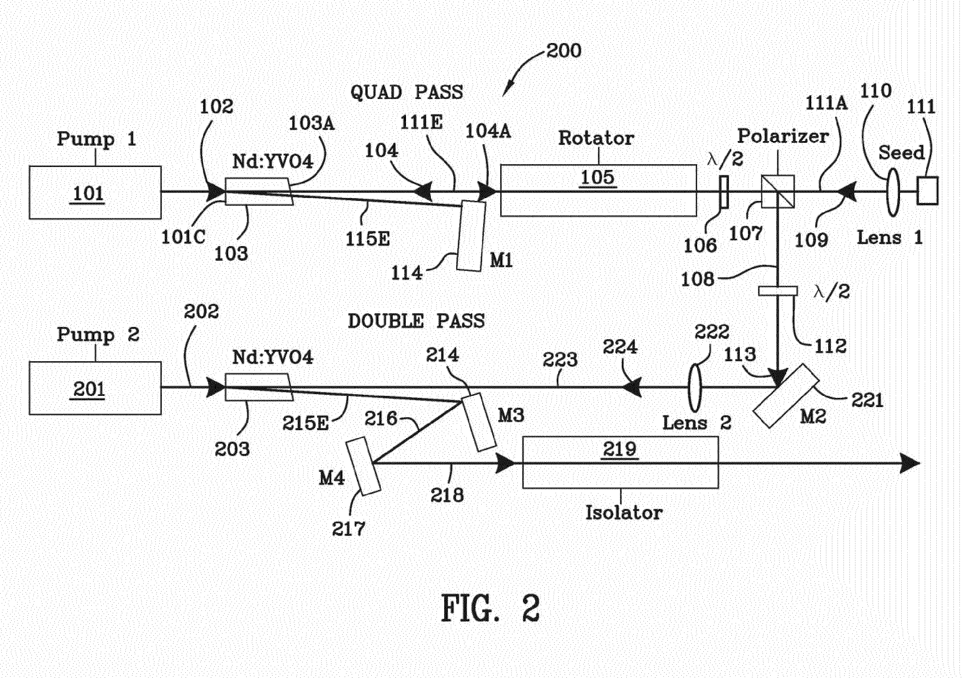

Fig. 2 is a schematic 200 illustrating a first amplifier having a quadruple pass (quad pass) $Nd:YVO_4$ gain medium 103 coupled with a second amplifier having a double pass (dual pass) gain medium 203. The first amplifier includes an optical end pump 101 and the second amplifier includes an optical end pump 201. Mirrors M1 (114), M2 (221), M3 (214) and M4 (217) are employed in the example of Fig. 2. An isolator 219 is also employed in the example of the invention set forth in Fig. 2. Polarizer 107 has a high polarization extinction ratio and provides natural isolation between the quad pass amplifier and the seed laser. Rotator 105 functions to block feedback power from the dual pass amplifier.

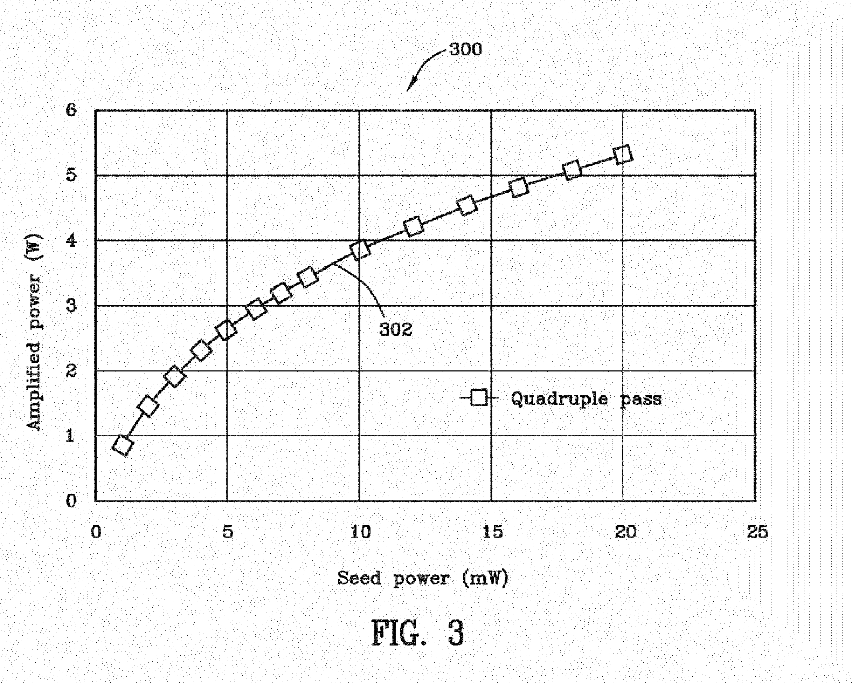

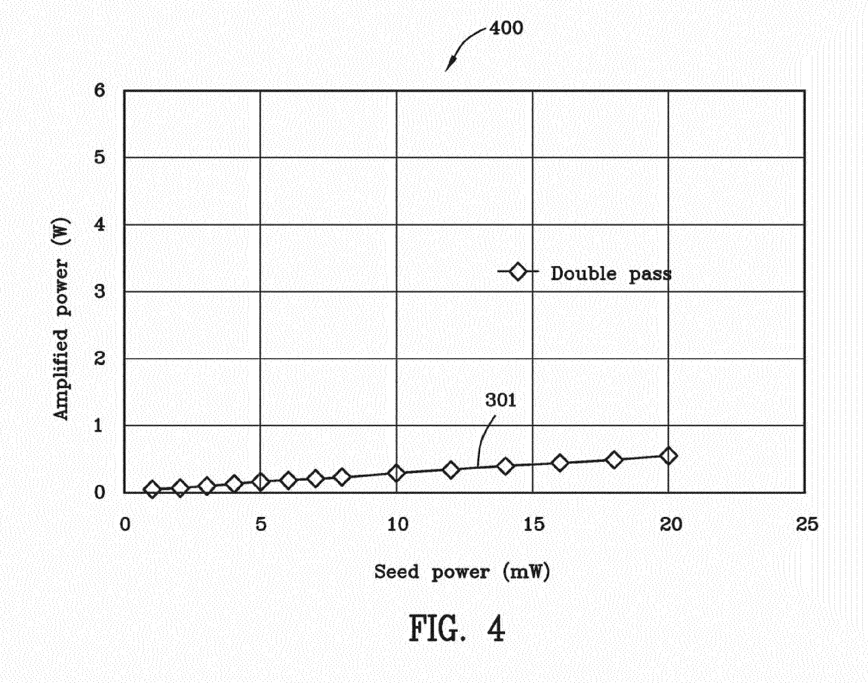

Fig. 3 is a graph 300 indicating power amplification of various mW average seed power pulses for the quad pass 302 of Fig. 1 and the dual pass 301 of Figs. 1A and 2. Quad-pass 302 shows better amplification gain than double-pass 301 as illustrated in Fig. 4. Seed power of 1-2 mW can be amplified to around 1.5 W with 30W pump. With higher pump power up to 35 W, and with seed laser average power of 20 mW, greater than 5W output power can be achieved with a single stage, quad pass amplifier.

Fig. 4 is a graph 400 indicating power amplification of various mW average seed power input signals for the dual pass schematic of Fig. 1A.

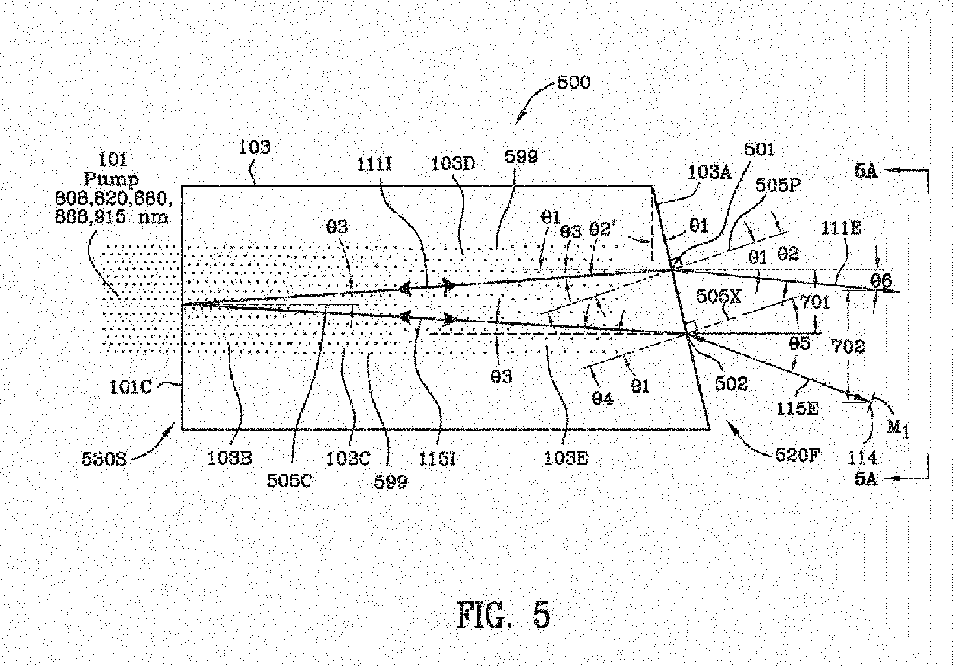

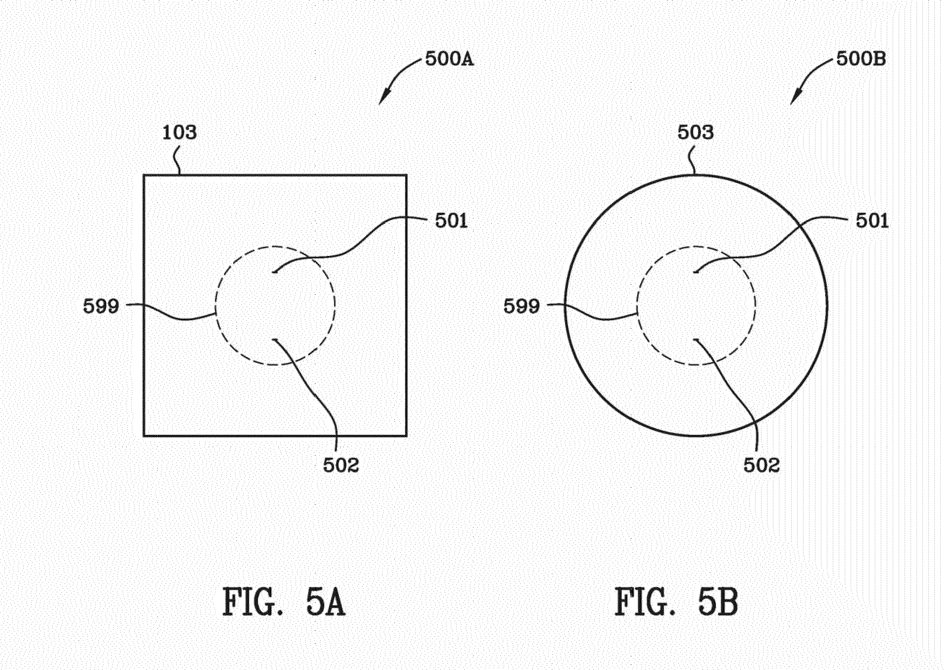

Fig. 5 is a schematic 500 indicating a $Nd:YVO_4$ gain medium 103 having a wedge surface 103A at the first end 520F of the gain medium and having a second end surface 101C at the second end 530S of the gain medium 103. Fig. 5 illustrates the first exterior path 111 E of the seed laser, the first interior path 111I of the first-time amplified seed laser, the second interior path 115I of the second-time amplified seed laser and the second exterior path 115E of the second-time amplified seed laser.

In the dual pass amplifier of Fig. 1A, the incoming laser makes two passes through the gain medium. Incoming pulses arrive along first exterior path 111 E at incident angle $\theta2$ where they impinge on wedge surface 103A and are then refracted along first interior path 111I at refraction angle $\theta2'$ until they impinge on the second surface 101 C. Along first interior path 111I the laser is sometimes referred to herein as the first-time amplified laser. The laser is then reflected on a second pass at a reflection angle $\theta3$ along second interior path 115I toward wedge surface 103A. Along second interior path 115I the laser is sometimes referred to herein as the second-time amplified laser. The laser then arrives at wedge surface 103A at incident angle $\theta4$ where it is refracted at refraction angle $\theta5$ along second exterior path 115E. In the dual pass example illustrated in Fig. 1A, M1 is not shown.

Fig. 4 is a graph indicating power amplification of various mW average seed power input signals for the dual pass schematic of Fig. 1A.

Referring to Figs. 1 and 5, in the quad pass amplifier, a mirror 114 (M1) is used to return the laser back to the gain medium 103. Referring to Fig. 5, in contemplation of the quad pass amplifier illustrated in Figs. 1 and 2, a highly reflective mirror 114 reflecting the laser along the second exterior path 115E to wedge surface 103A at location 502 and at incident angle $\theta5$ where the laser is refracted along second interior path 115I at refraction angle $\theta4$ as the third-time amplified laser. The laser is sometimes referred to herein as the third-time amplified laser as it is refracted along second interior path 115I at refraction angle $\theta4$. The third-time amplified laser proceeds along second interior path 115I and impinges on the highly reflective surface 101C where it is reflected as the fourth-time amplified laser along the first interior path 111I along internal reflective angle θ3 toward wedge surface 103A. The laser is sometimes referred to herein as the fourth-time amplified laser as it is travels along the first interior path 111I at incidental angle θ2'. First interior path 111I resides at incidental angle θ2' with respect to a line perpendicular to wedge surface 103A. Once the fourth-time amplified laser impinges on wedge surface 103A it is refracted at refraction angle θ2 and first exit path 111 E where the fourth-time amplified laser is directed toward and through rotator 105, half wave plate 106, polarizer 107 and half wave plate 112 where the fourth-time amplified laser proceeds in the direction of arrow 113.

Fig. 1 illustrates the quadruple pass amplifiers with four stages of amplification. Each time the laser passes through the gain medium the laser is amplified and picks up more energy. Fig. 1A illustrates the dual pass amplifier where there are two stages of amplification. Fig. 2 illustrates the combination of the quadruple pass (quad amplification, Fig. 1) and the dual pass (double amplification, Fig. 1A) enabling six stages of amplification.

Fig. 5A is an end view 500A of Fig. 5 along the lines 5A-5A. Fig. 5A illustrates the entrance location 501 on the wedge surface 103A of the incoming pulses along the first exterior path 111 E. Fig. 5A also illustrates the exit location 502 on the wedge surface 103A of the exiting pulses along the second exterior path 115E. In the example where the gain medium is used as a quadruple pass amplifier, the location 502 becomes the entrance location for the third pass and the location 501 becomes the exit location for the fourth pass.

Still referring to Figs. 5 and 5A, a diode pump 101 is illustrated proximate second end surface 101C which is highly transparent (transmissive) at the wavelength of 808 nm and highly reflective at the wavelength of 1064 nm. If other pumping wavelengths (820 nm, 880 nm, 888 nm, and 915 nm) are used then surface 101C is highly transmissive at these wavelengths. Surface 101C is coated and the coating has the aforementioned characteristics at respective wavelengths. Reference numerals 103B, 103C, 103D, and 103E illustrate regions of the $Nd:YVO_4$ gain medium 103. Region 103B is in proximity to the end surface 101C where relatively high energy/power is transferred. The concentration of the stippling (dots)/volume indicates the relative amount of energy/power transferred to the gain medium. It will also be noticed from Fig. 5 that the energy is transferred to the cylindrical core of the gain medium and the energy transfer is defined by the spot size of the pump energy entering the gain medium. Region 103C has fewer dots/volume indicating that the relative amount of energy/power transferred to the gain medium is less than in region 103B. Similarly, regions 103D and 103E have progressively still fewer dots/volume indicating the relative amount of energy/power transferred to the gain medium is lower as a function of the distance from the 808 nm pump. Reference numeral 599 represents schematically the radial extent of the diode end pump radiating power at a wavelength of 808 nm. Other pump wavelengths may be used, for instance, the pump central wavelengths may be at 808 nm, 820 nm, 880 nm, 888 nm or 915 nm, +/- 10 nm. The pump may be an end pump or one or more side pumps. The pump may be a diode pump light source or other suitable light source. Other types of pumps may be used.

Still referring to Figs. 5 and 5A, an important part of the quad pass and dual pass amplifier structure is the gain medium 103, which includes gain material, a doping concentration, cross-sectional area, length, structure and coating. $Nd:YVO_4$ is the material of the gain medium. $Nd:YVO_4$ has a high emission cross section and enough bandwidth to allow a pulse width of 10 picoseconds. $Nd:YVO_4$ is a naturally polarized crystal and it is a-cut. The polarization of the laser generated is along the c-axis of the crystal. The $Nd:YVO_4$ gain medium 103 as illustrated in Fig. 5 is uniformly doped. Uniform doping is sometimes referred to as homogeneous doping. Doping concentrations of between 0.05 - 3.0% at. (atomic weight percentage) are used in the naturally polarized $Nd:YVO_4$ crystal. The example of the $Nd:YVO_4$ gain medium is uniformly doped at a concentration in the range of 0.05 - 3.0 % at.. $Nd:YVO_4$ stands for and means Neodymium-doped Yttrium Vanadate.

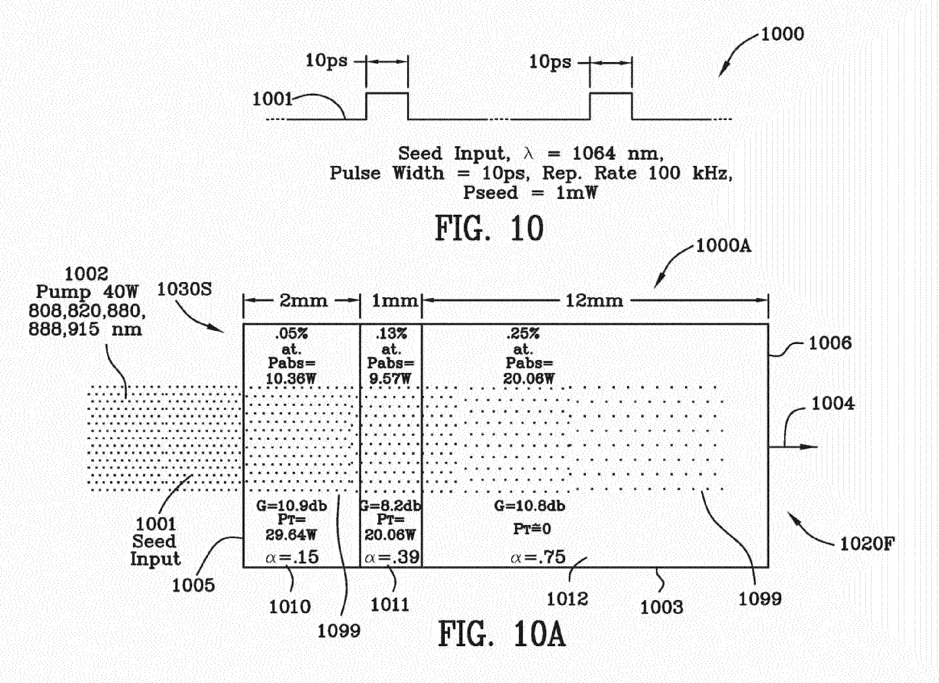

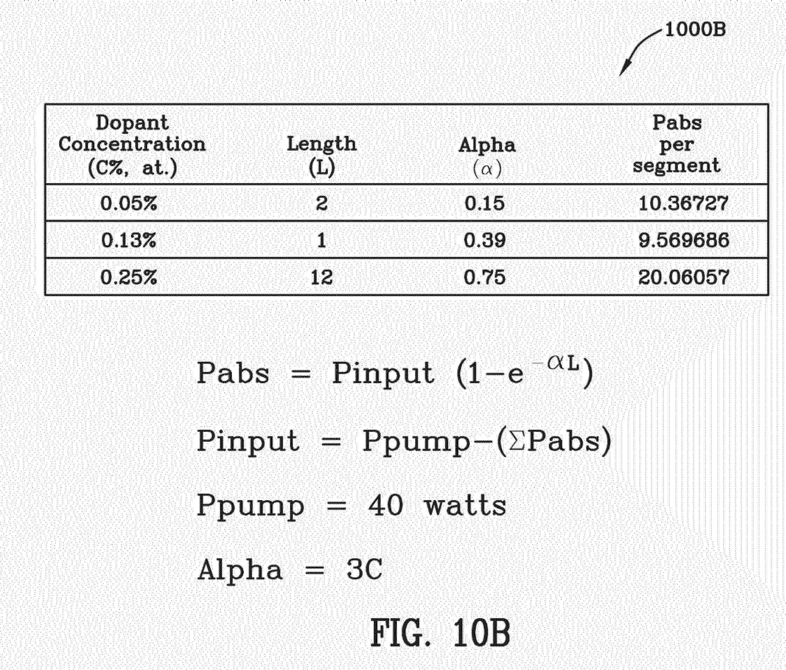

Designing an appropriate doping concentration is dependent on many factors. Besides gain and thermal lensing effects, one important factor is the maximum pump power applied (typically 30-60W) and the dimensions of the cross-section of the $Nd:YVO_4$ crystal. The optimized pump spot size is typically in the range of 0.3 to 2mm in diameter. As pump power increases, then dopant concentration is expected to be lower. Lower doping concentration enables use of higher pump power. The power applied by an end pump to a $Nd:YVO_4$ crystal is limited by the structure of the crystal itself. If too much power is applied to a crystal of given dopant concentration, it will fracture due to thermally induced tensile stress. Relatively more power can be applied to an $Nd:YVO_4$ crystal gain medium having a small cross-section, for example, 1 $mm^2$, as compared to a gain medium having a large cross-section, for example, 36 $mm^2$. Further, relatively more pump power can be applied to an $Nd:YVO_4$ crystal having a low Nd concentration, for example, 0.05 % at. Furthermore, relatively more pump power can be applied using a larger pump spot radius. Therefore, sizing a uniformly doped crystal must take into account all of the foregoing considerations. Figs. 10-11 illustrate and disclose a segmented gain medium. The pump spot size must be large enough to completely envelope the seed laser as they pass through the gain medium. Therefore, sizing a segmented doped crystal must also take into account all of the foregoing considerations.

$Nd:YVO_4$ is a naturally polarized crystal and is preferably 5 to 30 mm in length which can absorb more than 99 % pump power at 808 nm and 3 nm bandwidth (FWHM) at an appropriate doping concentration. In addition, longer crystals provide more surface area for heat removal. The pump spot size is typically .3 to 2mm in diameter. The cross section of the crystal may be as small as 4 $mm^2$ as the seed laser spot size in the crystal is around 0.4-0.6 mm in diameter. Therefore, the preferred size of the crystal has a cross-section of 4 mm$^2$ which provides enough aperture for the laser.

The cross-sectional dimensions of Nd:YVO$_4$ may be between 1 mm$^2$ to 36 mm$^2$. Doping concentrations which range between 0.05 % at. to 3.00 % at. can be determined by the maximum pump power applied (typically 30-50 W) and pump beam spot size.

As previously stated, the first end surface 103A of Nd:YVO$_4$ gain medium 103 is a planar wedge surface as shown in Fig. 5. The wedge surface design of the gain medium 103 is an important aspect of the amplifiers. The wedge surface eliminates the Etalon effect caused by two parallel surfaces. Two parallel surfaces of a gain medium in effect form an optical cavity. The etalon effect broadens pulse width and it forms self-lasing within the pumped gain medium. Self-lasing is undesirable as it destroys control of the output of the laser. The wedge surface 103A eliminates self-lasing between surfaces 103A, 101C of the gain medium 103. Even if AR (anti-reflective) coatings are applied on both sides of the crystal, potential lasing can happen between parallel first and second surfaces of a gain medium. Use of the wedge surface also helps to reduce the self-lasing effect between the surface of the gain medium and other optical surfaces used in the amplifier.

Still referring to Fig. 5, the wedge surface 103A of the gain medium 103 provides a wider separation angle between incoming pulses of the pulsed output along first exterior path 111 E and outgoing pulses along the second exterior path 115E. The wedge surface 103A is perpendicular to the a-c plane of Nd:YVO$_4$ where the polarization of the amplified laser is in the a-c plane. The wedge surface 103A is AR-coated at wavelength of 1064nm, and the second surface 101C is HT-coated at wavelengths of 808 nm and HR coated at wavelength of 1064nm. Appropriate coatings are used in connection with the operating wavelengths.

Still referring to Fig. 5, the first end of the generally rectangularly shaped Nd:YVO$_4$ gain medium includes a wedge surface 103A coated with an anti-reflective coating. The seed laser enters the anti-reflective coating on the wedge surface 103A of the Nd:YVO$_4$ gain medium at an incident angle, $\theta2$. The incident angle, $\theta2$, is measured with respect to a line 505P which is perpendicular to the wedge surface 103A of the Nd:YVO$_4$ gain medium 103. It will be noticed that the wedge surface is a planar surface and that it is formed at a wedge angle, $\theta1$. Wedge angle, $\theta1$, is measured with respect to a vertical plane cut through one point of the wedge surface. It will be further noticed that the input seed laser enters the wedge surface at an angle, $\theta6$, along line 111 E with respect to a line parallel to the center line of the gain medium. Reference is made to Fig. 5 where it is seen that $\theta6 = \theta2 - \theta1$. The wedge angle $\theta1$ may vary between 5-7° as it is desired and preferred to maintain the incidental angle, $\theta2$, of the seed laser less than or equal to 15°. A wedge angle of 5-7° yields a preferred internal reflective angle, $\theta3$, of approximately 0.78°.

It is an object of the invention to provide a laser having a high gain medium which includes a wedge surface. It will be noticed from Fig. 5 that the laser arrives on path 111 E which is not aligned with the centerline 505C of the gain medium The incident angle $\theta2$ is selected such that the seed laser impinge on the wedge surface and are refracted at an angle $\theta2$' on a first interior path 111I I within the high gain medium so as to reside within the pump spot size as they travel within the gain medium thus maximizing energy transfer to the laser. Reference numeral 599 represents the radial extent of the pump spot size. It is desired to match the laser within the pump spot size in the gain medium. Most of the energy of the pump tends to concentrate along the centerline 505C of the gain medium.

The seed laser is refracted at an angle $\theta2$' it impinges wedge surface 103A. The seed laser is reflected from surface 101C at an internal reflective angle, $\theta3$, along the second path 115I within the Nd:YVO$_4$ gain medium 103. The internal reflective angle, $\theta3$, is defined with respect to the centerline 505C of the Nd:YVO$_4$ gain medium. Additionally, the preferred internal reflective angle, $\theta3$, is approximately 0.78°. It is desired to minimize the reflective angle, $\theta3$, of the seed laser within the gain medium 103 such that it remains relatively centered with respect to the centerline of the axis through the gain medium so the seed laser can effectively extract the pump energy as they pass through the gain medium. Energy pumped into the gain medium is concentrated within the spot size of the end pump. If the incoming pulses of the seed laser match within the pump spot size within the Nd:YVO$_4$ gain medium, the pump spot size overlaps the seed laser on the first interior path 111I and the second interior path 115I of the laser and energy is efficiently transferred to the laser.

Additionally, the internal preferred reflective angle, $\theta3= 0.78$°, has to be large enough to ensure separation of the seed laser coming into the planar surface forming a wedge surface of the Nd:YVO$_4$ gain medium from the amplified laser exiting the planar surface of the gain medium.

The internal reflective angle, $\theta3 = 0.78$°, yields a shift with respect to the axis of the gain medium of approximately 0.27 mm for a gain medium that is approximately 20 mm in length. Additionally, if the gain medium is approximately 10 mm in length, then the preferred refractive angle, $\theta3= 0.78$°, yields a shift with respect to the axis of the gain medium of approximately 0.135 mm.

The seed laser is refracted on the first pass (first-time amplified) along a first interior path 111I through and within the Nd:YVO$_4$ gain medium as it travels toward the second end surface 101C of the Nd:YVO$_4$ gain medium. The second end surface 101 C of the Nd:YVO$_4$ gain medium proximate the pump includes a second coating highly reflective to the seed laser at the 1064 nm wavelength and the second coating is highly transparent to light from the end pump at 808 nm wavelength.

The seed laser is reflected at the internal reflective angle, θ3, by the highly reflective second coating on the second end surface 101 C of the Nd:YVO₄ gain medium and causes the 1064 nm wavelength laser to travel on a second pass (second time amplified) along a second interior path 115I through and within the Nd:YVO₄ gain medium toward the wedge surface 103A of Nd:YVO₄ gain medium. The laser pulses exit the wedge surface of the Nd:YVO₄ gain medium at a refraction angle, θ5. The diffraction angle, θ5, is measured with respect to a line normal (perpendicular) to the first end of Nd:YVO₄ gain medium.

Fig. 5A is an end view 500A of Fig. 5 along the lines 5A-5A illustrating a square, in cross-section, gain medium. Reference numeral 599 is the radial extent of the pump spot size in the gain medium. Reference numerals 501, 502 indicate the entrance and exit locations, respectively, of the laser. Fig. 5B is an end view 500B of a circular, in cross-section, Nd:YVO₄ gain medium.

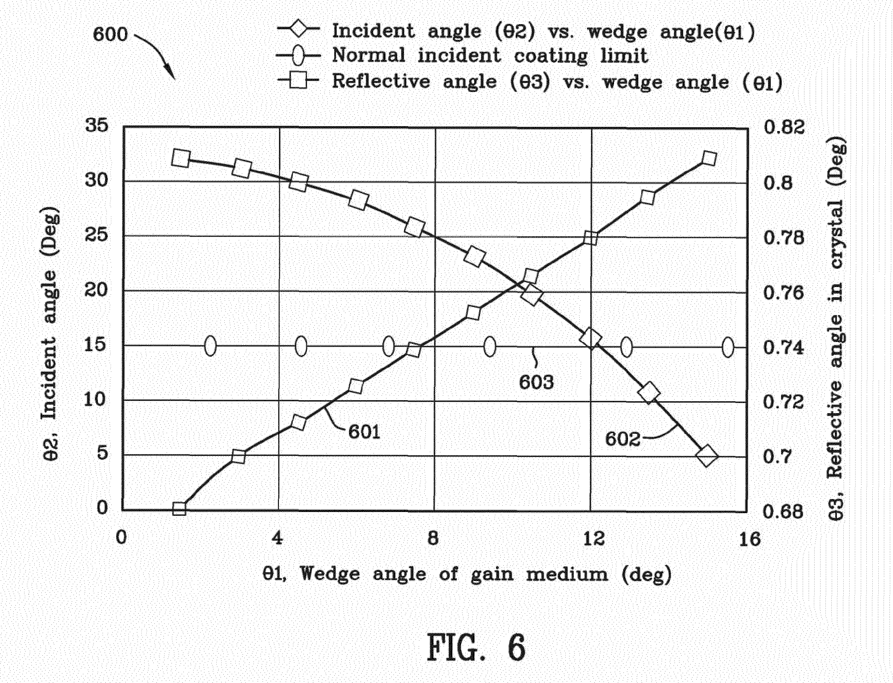

Fig. 6 is a graph 600 of: the wedge angle θ1 of the Nd:YVO₄ gain medium versus the incident angle θ2 of the pulses of the pulsed output of the seed laser, 601; the wedge angle θ1 of the Nd:YVO₄ gain medium versus the internal reflected angle θ3 in the gain medium, 602; and, the wedge angle θ1 of the Nd:YVO₄ gain medium versus normal incident coating limit, 603. Therefore, based on normal incident AR-coating a wedge angle of 5-7° corresponds to an incident angle of about 15°, and the internal reflective angle is approximately 0.78°.

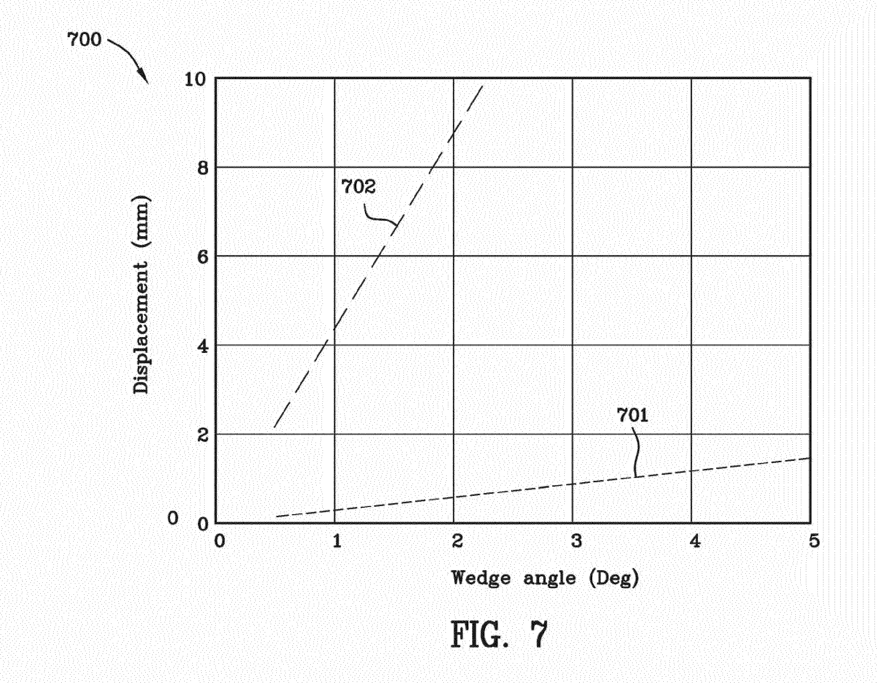

Fig. 7 is a graphical: plot 701 of the separation distance on the first end surface 103A of input path 111 E of the incoming laser from the output path 115E of the exiting pulses as a function of wedge angle θ1; and, plot 702 of the incoming seed laser 111 E as a function of wedge angle θ1.

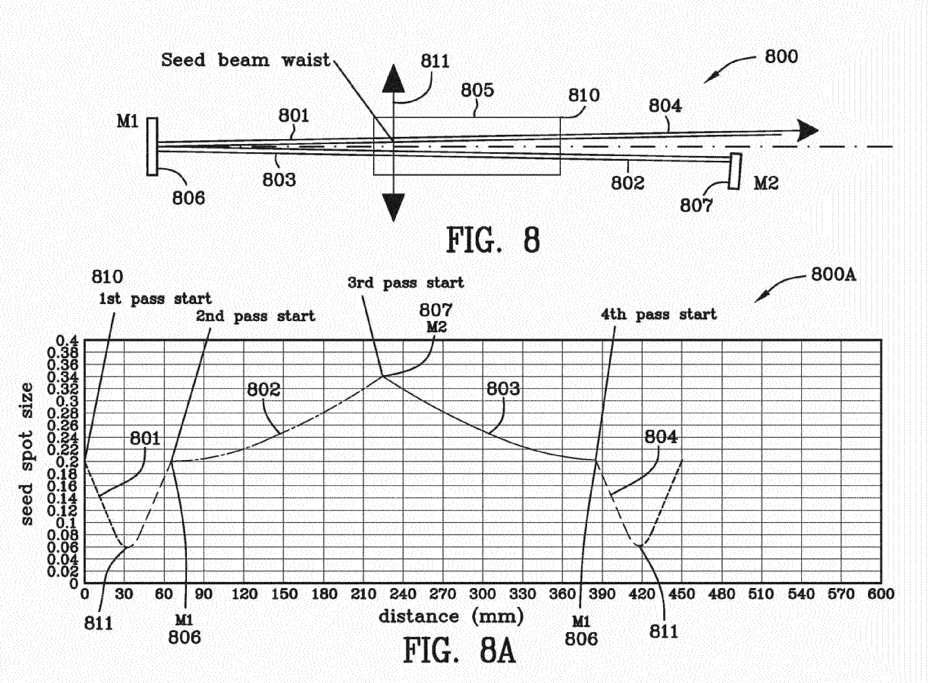

Fig. 8 is a schematic 800 of a quadruple pass amplifier including a Nd:YVO₄ gain medium 805, a first mirror 806, and a second mirror 807. Fig. 8A is a graph 800A of the spot size of the seed laser as a function of distance of travel for the schematic of Fig. 8 indicating the first pass 801, the second pass 802, the third pass 803, the fourth pass 804 and the location of the flat mirror 806 and the second curved mirror 807. The first pass 801 is approximately 64 mm in length, the second pass 802 is approximately 161 mm in length, the third pass 803 is approximately 161 mm in length, and the fourth pass 804 is approximately 64 mm in length. Reference numeral 810 represents the starting point of the first pass 801 in the gain medium 810. Reference numeral 811 is the seed beam waist and it is desirable to position the seed laser waist coincident with the waist of the optical pump (not shown) in Fig. 8. The seed laser waist is located approximately 2 mm inside the gain medium away from the pump surface (not shown in Fig. 8).

In a quad-pass amplifier, the mode match of laser and pump mode is very critical for each pass. Normally the mode match ratio between laser and pump spot (spot diameter of the laser)/(spot diameter of the pump) is from 0.6-1.2. Fig. 8A shows laser beam propagation of quad-pass amplifier. In consideration of the thermal lensing effect of the gain medium in a high-power pump, the proper design of M1 and M2 illustrated in Fig. 8A controls the spot size of laser mode for second, third, and fourth pass to match the pump mode.

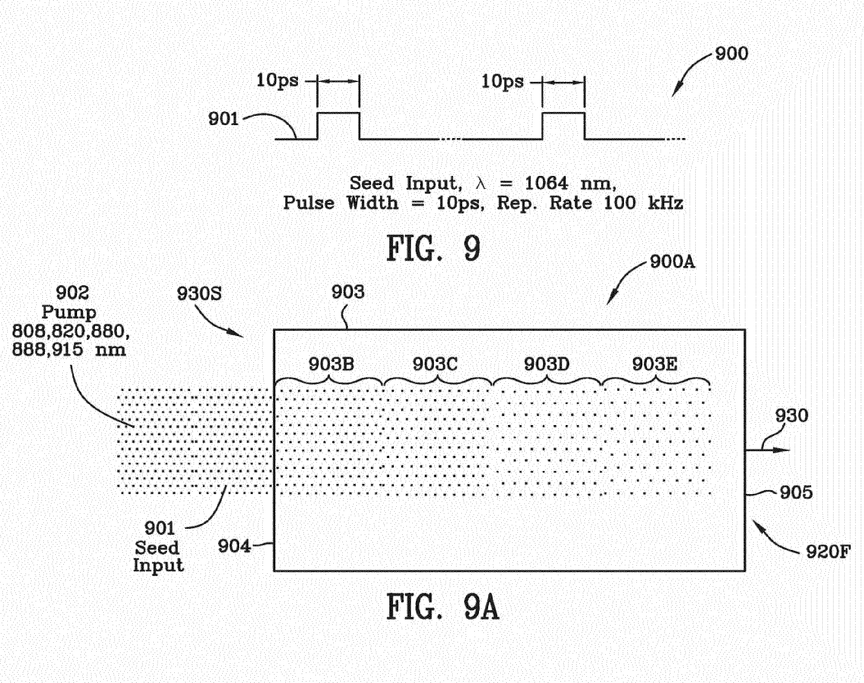

Fig. 9 is a schematic 900 presentation of the seed laser at a wavelength of 1064 nm, repetition rate of 100 kHz, and with a pulse width of 10 picoseconds. No average power is specified with respect to the pulse stream illustrated in Fig. 9. Fig. 9A is a schematic 900A of an optical pump 902 and the seed laser 901 residing proximate the second end 904 the Nd:YVO₄ gain medium 903. In this example the seed input 901 is coincident with the pump 902 and the seed input enters the second end surface 904 of the second end 930S of the gain medium 903. Second end surface 904 permits transmission of the diode pump radiation at 808 nm and the seed laser 901 at 1064 nm. The amplified laser exits the second end surface 905 of the second end 920F of the gain medium as indicated by arrow 930.

Still referring to Fig. 9A, arrow 930S indicates the second end of the gain medium 903 and arrow 920F denotes the first end of gain medium 903. Reference numerals 903B, 903C, 903D, and 903E illustrate regions of the Nd:YVO₄ gain medium 903. Region 903B is in proximity to the end surface 904 where relatively high energy/power is absorbed. The concentration of the stippling (dots)/volume indicates the relative amount of energy/power absorbed in the gain medium. It will also be noticed from Fig. 9A that the power is absorbed in the gain medium 903. The extraction efficiency is related to the seed laser power, and the gain. From region 903B to 903E, the power absorbed in each segment exponentially decays along the pump axis.

Fig. 10 is a schematic 1000 presentation of the pulses of the pulsed output 1001 of the seed laser at a wavelength of 1064 nm, repetition rate of 100 kHz, pulse width 10 picoseconds, and, average power around 1 mW.

Fig. 10A is a schematic 1000A of an optical pump 1002 operating at a wavelength of 808 nm, and the seed laser 1001 residing proximate the second end of the gain medium wherein the gain medium comprises three diffusion bonded segments 1010, 1011, 1012 having different lengths and dopant concentrations resulting in different gain distributions in each segment. More specifically, Fig. 10A is a schematic 1000A of end pumped segmented medium illustrating a diffusion bonded gain medium, Nd:YVO₄, comprising three segments 1010, 1011, 1012 with the dopant concentration of Nd in atomic weight percent, % at., for each segment, the power absorbed, $P_{abs}$, for each segment; the power transmitted $P_T$, for each segment; the optical gain, G, for each segment; and, the absorption coefficient, α, for each segment. Fig. 10B is a chart 100B of the dopant concentration, C % at., segment length in mm, α (scaled dopant concentration) and Pabs (absorbed power) per segment. Alternatively, instead of diffusion bonding, the segments 1010, 1011 and 1012 may be secured together by using anti-reflective coating between the segments.

Referring to Figs. 10A and 10B, the first segment 1010 has the lowest Nd doping concentration 0.05% and is 2 mm long. Scaling the doping percentage by a factor of 3 yields an $\alpha = 0.15$ where $\alpha$ is the absorption coefficient. The absorption efficiency is

$$\eta = (1 - e^{-\alpha L}).$$

It would appear, therefore, without any further knowledge of Nd:YVO$_4$ crystals that an increase in efficiency would be accomplished by using a longer crystal and/or by an increase in the absorption coefficient. However, the absorption coefficient does not indicate that there are physical limits to coefficient $\alpha$ and applied power. As power applied to the Nd:YVO$_4$ crystal increases, then the concentration of the Nd doping is reduced and the cross section of the crystal is then reduced. Lower doping concentration enables use of higher pump power.

Referring again to Figs. 10A and 10B, a seed laser in the range of mW is applied to the segmented medium which has a cross sectional area of 4 mm$^2$. In this example, the pump power is 40 W and the pump spot size is 0.5 mm in diameter. Pabs per segment is given by the following equation:

$$Pabs = Pinput(1 - e^{-\alpha L})$$

Since 40 W of end pumped power is applied to the first segment, the Pabs = 40 (1-e(-(0.15)(2)) W =10.36 Watts leaving 29.64 W available to the second segment 1011. The power available/transmitted to subsequent segment is given by the following equation.

$$Pinput = Ppump - (\Sigma Pabs)$$

P input to segment 1011 = 40W - (10.36 W) = 29.64 W.

Therefore, 29.64 W is available / transmitted through to the second segment 1011. Note that 40 W could be safely applied to the first segment 1010 without the risk of fracture because the doping concentration of Nd is small, to wit, 0.05 % at.

Next, the remaining unabsorbed 29.64W is applied to segment 1011 which has an Nd concentration of 0.13 % at. and is 1 mm long which yields Pabs = 29.64 (1-e$^{(-(0.39)(1))}$) W = 9.57 W. The power available/transmitted to the third segment, 1012, is:

$$\text{Pinput to segment 1012} = 40W - (10.36 + 9.57) W = 20.07 W.$$

Now, the power available or transmitted to the third diffusion bonded segment 1012 is 20.07 W. Since the third segment is 0.25 % at. Nd doped and is 12 mm long, the

$$Pabs = 20.07 \ (1-e^{(-(0.75)(12))}) \ W = 20.07 \ W.$$

Applying this system of scaling the pump power by absorbing pump power in segments allows usage of higher pump power and higher energy transfer to the Nd:YVO$_4$ crystal. Higher energy transfer to the Nd:YVO$_4$ crystal results in higher gain of the seed laser as it travels within the gain medium.

Each segment can be treated as one stage of an amplifier. An example is given to illuminate the concept. Segment 1010 produces a gain of 10.9 dB, so for a small signal seed laser such as around 1 mW input and approximately 10W pump power absorbed, the average power amplified from the first segment is 12.5 mW. Gain is calculated as follows:

$$Gain = 10\left( \log_{10} \frac{Pout}{Pin} \right)dB$$

Segment 1011 produces a gain of 8.2 dB so for a 12.5 mW average power seed input and 10 W pump power absorbed, the amplified average power exiting the second segment 1011 is 83 mW. Similarly, segment 1012 produces a gain of 10.8 dB so for a 83 mW power seed input and approximately 20W pump power absorbed, the amplified average power exiting the third segment is 1 W. The integrated gain (overall gain) of 3 segments is 30 dB.

If it is a single crystal design, the gain will be 28.7 dB with 1 mW seed laser and 40W pump power. The output power is 743 mW. Apparently the multi-segment gain is improved more than 34 % as 1000 mW / 743 mW = 1.34.

Using segments with gradually increased doping concentrations prevents fracturing of the segments as the power input to each segment is at an acceptable level the crystal can absorb without fracturing.

Using segments with different doping concentrations, the gain distribution can be optimized to obtain high extraction efficiency.

The publication entitled, Power Scaling of Diode-Pumped Nd:YVO4 Lasers, IEE JOURNAL OF QUANTUM ELECTRONICS, VOL. 38, NO. 9, SEPTEMBER 2002, Xiaoyuan Peng, Lei Xu, and Anand Asundi, is incorporated herein by reference hereto in its entirety.

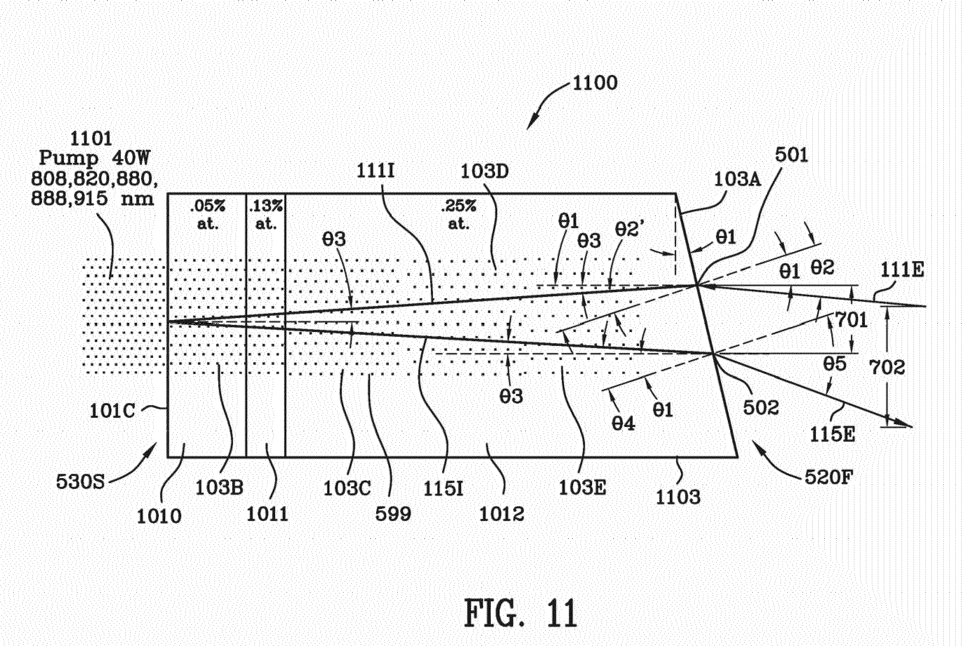

Fig. 11 is a schematic 1100 similar to Fig. 5 wherein the Nd:YVO$_4$ gain medium comprises three segments 1110, 1011, 1012 with different doping concentration for each segment. Fig. 11 is an example similar to the example of Fig. 10A with the exception that Fig. 11 depicts a dual pass amplifier. The seed laser is amplified as they travel on both the first interior path 111I and the second exterior path 115I. The gain is therefore greater in the dual pass configuration and the gain is still greater in the quad pass configuration.

The invention has been set forth by way of example. Those skilled in the art will recognize that changes may be made to the examples without departing from the spirit and the scope of the appended claims.

**List of reference signs**

| | |
|---|---|
| 100 | schematic of quadruple pass amplifier |
| 100A | schematic of dual pass amplifier |
| 100B | schematic perspective view of the example of Fig. 1 |
| 100C | schematic perspective of optical side pump arrangement |
| 100D | schematic view another example of a laser including an optically side pumped Nd:YVO$_4$ gain medium. |
| 100E | schematic view of another example of a laser including an optically side pumped Nd:YVO$_4$ gain medium. |
| 101 | 808 nm, 820 nm, 880 nm, 888 nm, 915 nm, +/-10 nm end pump |
| 101C | coated end surface of the crystal, coating is highly transparent to 808 nm pumping from end pump 101, coating is highly reflective at the 1064 nm incoming seed signal embedded within the picosecond pulses |
| 102 | arrow indicating direction of 808 nm end pump |
| 103 | Nd:YVO$_4$ crystal, gain medium |
| 103A | planar wedge surface of crystal, coated with anti-reflective coating |
| 103B | intensity variation of pump within gain medium |
| 103C | intensity variation of pump within gain medium |
| 103D | intensity variation of pump within gain medium |
| 103E | intensity variation of pump within gain medium |
| 103R | Nd:YVO$_4$ crystal, gain medium |
| 104 | arrow indicating direction of seed laser input |
| 104A | arrow indicating direction of amplified output signal from the crystal 103 into rotator 105 |
| 111B | position after rotator 105 in regard to the seed laser input 111A to crystal 103, position before rotator 105 in regard to the amplified output signal from the quadruple pass amplifier |
| 105 | rotator |
| 106 | 112- λ/2 wave plate |
| 107 | polarizer |
| 108 | output of polarizer in the direction of λ/2 wave plate 112 |
| 109 | arrow indicating direction of seed laser |
| 110 | lens |

| | |
|---|---|
| 111 | seed laser |
| 111A | lens output |
| 111E | first exterior path of laser |
| 111I | first interior path of laser within gain medium 103 |
| 111B | first exterior path of laser |
| 113 | arrow indicating output of amplified laser signal |
| 114 | mirror reflecting amplified signal back to quad pass amplifier for further amplification |
| 115E | second exterior path of laser |
| 115I | second interior path of laser within gain medium 103 |
| 199 | optical side pump, 808 nm, 820 nm, 880 nm, 888 nm, 915 nm, +/- 10 nm |
| 199A | optical side pump, 808 nm, 820 nm, 880 nm, 888 nm, 915 nm, +/- 10 nm |
| 199B | optical side pump, 808 nm, 820 nm, 880 nm, 888 nm, 915 nm, +/- 10 nm |
| 199C | optical side pump, 808 nm, 820 nm, 880 nm, 888 nm, 915 nm, +/- 10 nm |
| 199C | optical side pump, 808 nm, 820 nm, 880 nm, 888 nm, 915 nm, +/- 10 nm |
| 199D | optical side pump, 808 nm, 820 nm, 880 nm, 888 nm, 915 nm, +/- 10 nm |
| 199E-199C | optical side pump, 808 nm, 820 nm, 880 nm, 888 nm, 915 nm, +/- 10 nm |
| 200 | quad pass preamplifier in combination with a dual pass power amplifier |
| 201 | second 808 nm pump for energizing second Nd:YVO$_4$ crystal, gain medium |
| 203 | second Nd:YVO$_4$ crystal, gain medium |
| 214 | mirror M3 |
| 215 | signal from gain medium 203 to mirror M3, reference numeral 214, |
| 216 | signal between mirror 214 and mirror 217 |
| 217 | mirror M4 |
| 218 | path of laser signal toward isolator 219 |
| 219 | isolator |
| 221 | second mirror for directing light to dual pass amplifier |
| 222 | lens |
| 223 | path of amplified laser signal to dual pass amplifier |
| 224 | arrow indicating direction of amplified laser signal to dual pass amplifier |
| 300 | graph of low seed powers (1-25 mW) and amplified power in Watts |
| 301 | dual pass amplified power |
| 302 | quad pass amplified power |
| 400 | graph 400 indicating power amplification of various mW average seed power input signals for the dual pass schematic of Fig. 1A. |
| 500 | schematic diagram of the gain medium 103 |
| 500A | end view of the gain medium 103 |
| 500B | end view of the circular, in cross-section, gain medium |
| 501 | entrance location of incoming pulses to the gain medium |
| 502 | exit location of pulses from the gain medium |
| 503 | circular in cross-section gain medium |
| 505C | centerline of gain medium 103 |
| 505P, 505X | perpendicular lines with respect to the wedge surface 103A |
| 520F | arrow indicating first end of the gain medium 103 |
| 530S | arrow indicating second end of the gain medium 103 |
| 599 | radial extent of pump spot size in gain medium |
| 600 | graph of wedge angle θ1 vs. incident angle θ2, and, graph of wedge angle θ1 vs. reflective angle θ3 |
| 601 | plot of graph of wedge angle θ1 vs. incident angle θ2 |
| 602 | plot of wedge angle θ1 vs. reflective angle θ3 |
| 700 | graph of distance between mirror M1 to centerline as a function of wedge angle θ1, 702; graph of separation distance of input beam from output beam as a function of wedge angle θ1, 701 ; graph of separation of incidental angle θ2 minus refraction angle θ5 as a function of wedge angle θ1, 703; |
| 701 | plot of separation distance on the first end surface 103A of input beam from output beam as a function of wedge angle θ1 |
| 702 | plot of distance between mirror M1 to the seed laser incoming 111E as a function of wedge angle θ1 |
| 800 | quad pass amplifier design using M1, a mirror 806, and M2, a mirror 807, and a gain medium 805 |
| 801 | first pass, approximately 64 mm in length |
| 802 | second pass, approximately 161 mm in length |
| 803 | third pass, approximately 161 mm in length |

| 804 | fourth pass, approximately 64 mm in length |
|---|---|
| 805 | gain medium, Nd:YVO$_4$ |
| 806 | mirror, M1 |
| 807 | mirror, M2 |
| 810 | start of first pass in gain medium |
| 900 | pulse train/signal of the seed input having wavelength of 1064 nm, pulse width 10ps, repetition rate of 100 kHz, average power around 1mW |
| 900A | schematic of end pumped gain medium 903 |
| 901 | seed input |
| 902 | 808 nm pump |
| 903 | gain medium, Nd:YVO$_4$ |
| 903B | intensity variation of pump within gain medium |
| 903C | intensity variation of pump within gain medium |
| 903D | intensity variation of pump within gain medium |
| 903E | intensity variation of pump within gain medium |
| 904 | second end surface coated with highly transparent coating at both 808 nm and 1064 nm |
| 920F | first end of the gain medium |
| 930 | arrow indicating laser output |
| 930S | second end of the gain medium |
| 1000 | schematic of the seed input having wavelength of 1064 nm, pulse width 10 ps, repetition rate of 100 kHz, average power around 1 mW |
| 1000A | schematic of end pumped segmented medium illustrating a diffusion bonded gain medium, Nd:YVO$_4$, comprising three segments with the dopant concentration of Nd in atomic weight percent, at., for each segment, the power absorbed, P$_{abs}$, for each segment; the power transmitted P$_T$, for each segment; the segment gain, G; and, the absorption coefficient, a, for each segment |
| 1000B | table for three segment gain medium, Nd:YVO$_4$, illustrating dopant concentration, length, the absorption coefficient, a, and the power absorbed, P$_{abs}$, along with the equation for the power absorbed |
| 1001 | seed input having wavelength of 1064 nm, pulse width 10 ps, repetition rate of 100 kHz, average power around 1 mW |
| 1002 | 808 nm pump |
| 1003 | gain medium, Nd:YVO$_4$ |
| 1004 | arrow indicating laser output of gain medium 1003 |
| 1005 | second end surface of the second end of gain medium 1003 having coating highly transparent (transmissive) to 808 nm and 1064 nm wavelengths |
| 1006 | first end surface of gain medium 1003 having anti-reflective coating highly transparent (transmissive) to 808 nm and 1064 wavelengths |
| 1010 | first segment 2mm in length, Nd concentration 0.05 % at. Pabs = 10.4 W, Gain=10.9 dB, Pt=29.6 W, $\alpha$ = 0.15 |
| 1011 | second segment 1mm in length, Nd concentration 0.13 % at. Pabs = 9.6 W, Gain=8.2, Pt= 20.1 W, $\alpha$ = 0.30 |
| 1012 | third segment 12mm in length, Nd concentration 0.25 % at. Pabs = 20.1 W, Gain=10.8, Pt= 0.1 W, $\alpha$ = 0.75 |
| 1020F | arrow indicating the first end of gain medium 1003 |
| 1030S | arrow indicating the second end of gain medium 1003 |
| 1100 | schematic diagram of segmented gain medium for use in connection with seed input signal |
| 1110 | first segment 2mm in length, Nd concentration 0.05 % at. Pabs = 10.4 W, Gain=10.9 dB, Pt= 29.6 W, $\alpha$ = 0.15 5 |
| 1111 | second segment 1mm in length, Nd concentration 0.13 % at. Pabs = 9.6 W, Gain=8.2 dB, Pt= 20.1 W, $\alpha$ = 0.30 |
| 1112 | third segment 12mm in length, Nd concentration 0.25 % at. Pabs = 20.1 W, Gain=10.8 dB, Pt= 0 W, $\alpha$ = 0.75 |
| $\theta$1 | wedge angle |
| $\theta$2 | incident angle (up to 15°) for the first pass of the seed laser along path 111E; refractive angle for the fourth pass of seed laser along path 111E; |
| $\theta$2 | refractive angle for the first pass of the seed laser along path 111I; incident angle for the fourth pass of the seed laser along path 111I in the quad pass example |
| $\theta$3 | internal reflective angle (.78°) which impinges on surface 101C, highly reflective at 1064 nm; |
| $\theta$4 | incident angle for the second pass of the seed laser along path 115I; refractive angle for the third pass along path 115I in the quad pass example |
| $\theta$5 | refractive angle for the second pass of the seed laser along path 115E; incident angle for the third pass of the seed laser along path 115E in the quad pass |

$$Pabs = Pinput(1 - e^{-\alpha L})$$

$$Pinput = Ppump - (\Sigma Pabs)$$

$$Gain = 10\left(\log_{10}\frac{Pout}{Pin}\right)dB$$

**Claims**

1. A laser, comprising:

   a seed laser, said seed laser operating at a first wavelength;
   said seed laser includes a pulsed output, said pulsed output includes pulses radiating from said seed laser at a repetition rate, pulse width, average power and a polarization;
   an amplifier;
   said amplifier includes a gain medium and a diode pumped light source;
   said diode pumped light source operating at a second wavelength;
   said first wavelength of said seed laser being different than said second wavelength;
   said gain medium of said amplifier being polarized;
   said gain medium includes a first end and a second end; and,
   said second end of said $Nd:YVO_4$ gain medium of said amplifier includes a second end surface proximate said seed laser input and proximate said diode pumped light source operating at said second wavelength.

2. The laser according to claim 1, **characterized by** further comprising:

   said $Nd:YVO_4$ gain medium includes a plurality of segments diffusion bonded together;
   said first segment closet to said diode pumped light source has a lower Nd concentration than the next adjacent segment further away from said diode pumped light source.

3. The laser according to claim 1 or 2, **characterized by** further comprising:

   said $Nd:YVO_4$ gain medium includes a plurality of segments affixed together;
   each of said segments includes an Nd concentration.

4. The laser according to claim 3, **characterized by** further comprising:

   said Nd concentration of each segment being greater than or equal to 0.00 % at.;
   said segments arranged such that said segment with the lowest Nd concentration is closest to said diode pumped light source, and that the remainder of said plurality of segments are arranged adjacent to said segment having said lowest Nd concentration in ascending order of Nd concentration.

5. The laser according to anyone of the preceding claims, **characterized by** further comprising:

   said $Nd:YVO_4$ gain medium includes first, second and third segments affixed together;
   said first segment has a first Nd concentration;
   said second segment has a second Nd concentration higher than said first Nd concentration;

and,
said third segment has a third Nd concentration higher than said second segment.

6. The laser according to claim 5, **characterized in that** said first, second and third Nd concentrations are less than 2 % at.

7. The laser according to claim 6, **characterized by** further comprising:

said Nd:YVO$_4$ gain medium in cross-section includes sides 2 mm by 2 mm.

8. The laser according to anyone of the preceding claims, **characterized in that** said second wavelength of said diode pumped light source is selected from the following group of wavelength 808 nm +/-10 nm, 820 nm +/-10nm, 880 nm +/-10 nm, 888 nm +/-10 nm, 915 nm +/-10nm.

9. The laser according to anyone of the preceding claims, **characterized in that** said Nd:YVO$_4$ gain medium pump has a cross-sectional area between 1-36 mm$^2$.

10. The laser according to anyone of the preceding claims, **characterized in that** said pump light source and said diode pumped light source, respectively, is an end pump, a side pump or a plurality of side pumps.

11. The laser according to anyone of the preceding claims, **characterized in that** said gain medium is rectangular shaped, in cross-section, including a square cross section.

12. The laser according to anyone of the preceding claims, **characterized in that** said gain medium is circularly shaped, in cross-section.

13. The laser according to anyone of the preceding claims, **characterized by** further comprising:

said pulses of said pulsed output of said seed laser having a width of approximately 10 picoseconds, especially a width between 15 milliseconds and 15 femtoseconds;
said repetition rate of said pulsed output of said seed laser in the range of 10 Hz-100 MHz,
said dependent on said pulse width.

14. A laser amplification process, comprising the steps of:

operating a seed laser at a first wavelength, said seed laser includes a pulsed output, said pulsed output includes pulses radiating from said seed laser at a repetition rate, pulse width,
average power and a polarization;
matching said polarization of said incoming seed laser with the polarization of a Nd:YVO$_4$ gain medium;
optically pumping, using an optical pump, said Nd:YVO$_4$ gain medium at a second wavelength with an optical pump;
directing said seed laser along a first exterior path into an anti-reflective coating applied on a wedge surface of said Nd:YVO$_4$ gain medium;
refracting, along a first interior path through and within said Nd:YVO$_4$ gain medium, said laser toward a second end surface of said Nd:YVO$_4$ gain medium, said laser being first-time amplified, said second end surface of said Nd:YVO$_4$ gain medium proximate includes a second coating, said second coating being highly reflective to said seed laser operating at said first wavelength and said second coating being highly transparent to light from said optical pump;
reflecting, said first-time amplified laser by said highly reflective second coating of said second surface of said Nd:YVO$_4$ gain medium along a second interior path through and within said Nd:YVO$_4$ gain medium traveling toward said wedge surface of said Nd:YVO$_4$ gain medium,
after reflection said laser being second-time amplified;
refracting, said second-time amplified laser from said wedge surface of said Nd:YVO$_4$ gain medium along a second exterior path;
reflecting, said second-time amplified laser from a highly reflective mirror, said mirror positioned perpendicularly with respect to said second exterior path of said seed laser exiting said Nd:YVO$_4$ gain medium, along said second exterior path toward and into said wedge surface;
refracting, said second-time amplified laser on and along said second interior path through and within said

Nd:YVO$_4$ gain medium traveling toward said highly reflective second coating on said second end surface of said Nd:YVO$_4$ gain medium, said laser being third-time amplified after refraction on and along said second interior path;

reflecting, said third-time amplified laser on said highly reflective second coating on said second surface of said second end of said Nd:YVO$_4$ gain medium, along said first interior path through and within said Nd:YVO$_4$ gain medium traveling toward said wedge surface of said first end of said Nd:YVO$_4$ gain medium, after reflection said laser being fourth-time amplified;

and,

refracting said fourth-time amplified laser from said wedge surface of said first end of said Nd:YVO$_4$ gain medium along said first exterior path.

15. The laser amplification process according to claim 14, **characterized in that** said second coating of said second end surface of said Nd:YVO$_4$ gain medium permits light from said diode pumped light source to energize said Nd:YVO$_4$ gain medium.

FIG. 1

FIG. 1A

FIG. 1B

FIG. 1C

QUAD PASS

100D

Seed
111
110
111A
Polarizer
109
Lens 1
λ/2
112
λ/2
107
106
108
113
Rotator
105
104A
111E
104
M1
115E
114
199B
199A
199B
199A
103

# FIG. 1D

FIG. 1E

FIG. 2

EP 2 713 457 A2

FIG. 3

FIG. 4

FIG. 5

FIG. 5B

500B

503

501

502

599

FIG. 5A

500A

103

501

502

599

FIG. 6

FIG. 7

FIG. 8

FIG. 8A

Seed Input, $\lambda$ = 1064 nm,
Pulse Width = 10ps, Rep. Rate 100 kHz

## FIG. 9

## FIG. 9A

EP 2 713 457 A2

Seed Input, λ = 1064 nm,
Pulse Width = 10ps, Rep. Rate 100 kHz,
Pseed = 1mW

FIG. 10

FIG. 10A

EP 2 713 457 A2

1000B

| Dopant Concentration (C%, at.) | Length (L) | Alpha $(\alpha)$ | Pabs per segment |
|---|---|---|---|
| 0.05% | 2 | 0.15 | 10.36727 |
| 0.13% | 1 | 0.39 | 9.569686 |
| 0.25% | 12 | 0.75 | 20.06057 |

$$\text{Pabs} = \text{Pinput} \; (1 - e^{-\alpha L})$$

$$\text{Pinput} = \text{Ppump} - (\Sigma \text{Pabs})$$

$$\text{Ppump} = 40 \text{ watts}$$

$$\text{Alpha} = 3C$$

## FIG. 10B

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7720121 B, Peng

- US 7203214 A, Butterworth

**Non-patent literature cited in the description**

- **XIAOYUAN PENG ; LEI XU ; ANAND ASUNDI.** Power Scaling of Diode-Pumped Nd:YVO4 Lasers. *IEEE JOURNAL OF QUANTUM ELECTRONICS,* September 2002, vol. 38 (9

- **XIAOYUAN PENG ; LEI XU ; ANAND ASUNDI.** Power Scaling of Diode-Pumped Nd:YVO4 Lasers. *IEE JOURNAL OF QUANTUM ELECTRONICS,* September 2002, vol. 38 (9